# EUROPEAN PATENT SPECIFICATION

(11) **EP 3 073 183 B1**
(45) Date of publication and mention of the grant of the patent: **01.09.2021**
(21) Application number: 16162498.6
(22) Date of filing: 25.03.2016
(51) Int. Cl.: F21S 43/14, F21S 43/237, F21S 43/239, F21S 43/245, F21S 43/27, G02B 6/00, F21V 8/00

(54) **LIGHTING DEVICE FOR VEHICLES**
BELEUCHTUNGSVORRICHTUNG FÜR FAHRZEUGE
DISPOSITIF D'ÉCLAIRAGE POUR VÉHICULES

(30) Priority: 25.03.2015 IT TO20150184
(43) Date of publication of application: 28.09.2016
(73) Proprietor: Marelli Automotive Lighting Italy S.p.A., 10078 Venaria Reale (TO) (IT)
(72) Inventor: Capanema, Thiago, 30535-630 Belo Horizonte (BR)
(74) Representative: Plebani, Rinaldo

(56) References cited:
- EP-A1- 2 775 197
- EP-A2- 2 071 228
- EP-A2- 2 568 321
- EP-A2- 2 592 333
- DE-A1-102011 050 062
- FR-A1- 2 944 581
- KR-A- 20130 019 983
- US-A1- 2004 208 016

## Description

### Technical field of the invention

The present invention relates to a lighting device, which is cost-effective to be manufactured and which allows to obtain in an easy manner a desired lighting pattern.

### Technical Background

Lighting devices based on the use of a light guide are well known in the art. The light guide consists in an elongated element made of a material pervious to the light and having a constant cross section, usually circular; it receives light rays emitted by a light source, usually of the LED type, at one end and the light is transmitted inside the light guide towards the opposite end by internal total reflection. However, in the lighting device of this kind the only visible illuminated surface is limited to the diameter or section of the light guide.

In order to obtain a different, e.g. wider, illumination pattern, a light filter or lenses placed in front of light guide are used or direct reflection systems are used. In certain applications also light bars are used, which are essentially light guides having a larger section.

In order to let the light to exit in a direction substantially perpendicular to the axis of development in length of the light guide, i.e. perpendicular to the direction along with the light rays are transmitted along the light guide, the so called light curtains are used. They consist of a flat light guide having a rear side surface provided with prisms or other light deviation means which reflect progressively part of the light rays through a front side surface of the light guide, realizing the required light pattern.

However, this solution may have the drawback consisting in a stronger attenuation of the light energy projected along the light guide, so that non uniform light pattern may be obtained. The lighting devices based on the use of a light guide are in e.g. known from EP 2 071 228 A2, EP 2 775 197 A1, EP 2 592 333 A2 and EP 2 568 321 A2.

### Summary of the invention

The object of the present invention is to provide a lighting device for vehicles that is simple and cost-effective in construction and highly reliable, while ensuring an optimal distribution of the illumination and a rational use of the energy supplied by the lighting source of the device, in particular suited for using LED lighting sources.

According to the invention, therefore, a lighting device for vehicles is provided having the features set out in the appended claims.

### Brief description of the drawings

Further features and advantages of the present invention will become more apparent from the following description of two non-limiting embodiments thereof, made with reference to the figures in the accompanying drawings, in which:
- figures 1 and 2 show perspective views, a front, three-quarters view and a three-quarters view from the above, respectively, figure 2 in an enlarged scale, of a lighting device for vehicles according to the invention;
- figures 3 and 4 show in an enlarged scale, two three quarters perspective views, from the front and the rear, respectively, of same components of the lighting device of figures 1 and 2;
- figures 5, 6 and 7 show in a reduced scale, respectively, a three quarters front view from the above, a plan view from the above and a plan view from below of the same components shown in figure 4; and
- figures 8 and 9 show in a fair enlarged scale details on one of the components shown in figure 4.

### Detailed description

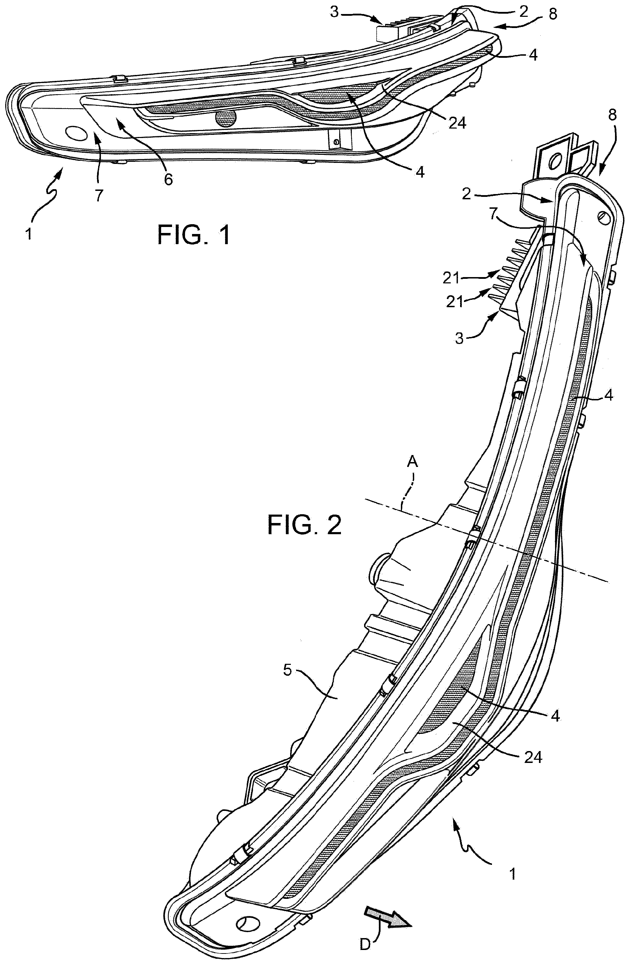

With reference to figures 1 to 9, reference numeral 1 indicates as a whole a lighting device consisting, in the non limiting embodiment shown, in a vehicle headlight. It is however to be intended that what will be described can be applied to any vehicle lighting device, e.g. to headlights, rear lamps, direction lights, fog lamps, DRL lights, etc.

The lighting device 1 comprises a housing 2 designed to be mounted on a vehicle, known and not shown for sake of simplicity. Housing 2 comprises a cup-shaped body 5 made of synthetic plastic material by injection molding and has a front face 6 in use facing opposite to the vehicle and along a driving direction of the vehicle, toward an opening inlet of body 5 closed by a transparent cover 7.

Housing 2 carries at least a light source 3 and at least one light guide 4; the light guide 4 is arranged within the cup-shaped body 5, facing the front face 6 and the cover 7 and the light source 3 is carried by housing 2 at the rear side of cup-shaped body 5, in the embodiment shown at one inboard end 8 of body 5, namely at an end 8 of body 5 facing in use the inside of the vehicle.

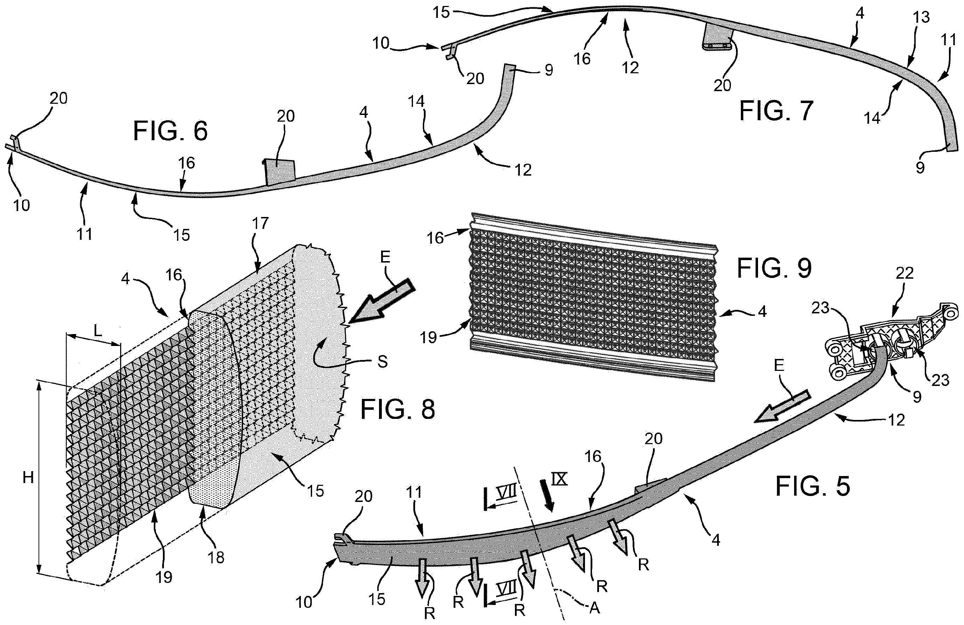

The light guide 4, as it is well known in the art, is designed to collect light rays from the light source 3 and to deliver the light rays collected from the light source along an optical axis A (figures 2 and 5) transverse to the front face 6 and extending in the driving direction, indicated by arrow D in figure 2.

The light guide is, according to a first feature of the invention, shaped as/consisting in an elongated element 4 made of a material pervious to light, e.g. glass or, better, a transparent synthetic plastic material like polycarbonate or plexiglass®.

The elongated plastic element constituting the light guide 4 has a first end 9 and a second, opposite, end 10 and has moreover a solid cross section S (figure 8) delimited by a number of lateral surfaces.

In the embodiment shown, the light guide consisting in the elongated element 4 comprises a first stretch 11 adjacent to /arranged towards end 10 and a second stretch 12 adjacent to/arranged towards end 9, which stretches 11 and 12 are joined together in a continuous manner in the direction of development in length of element 4.

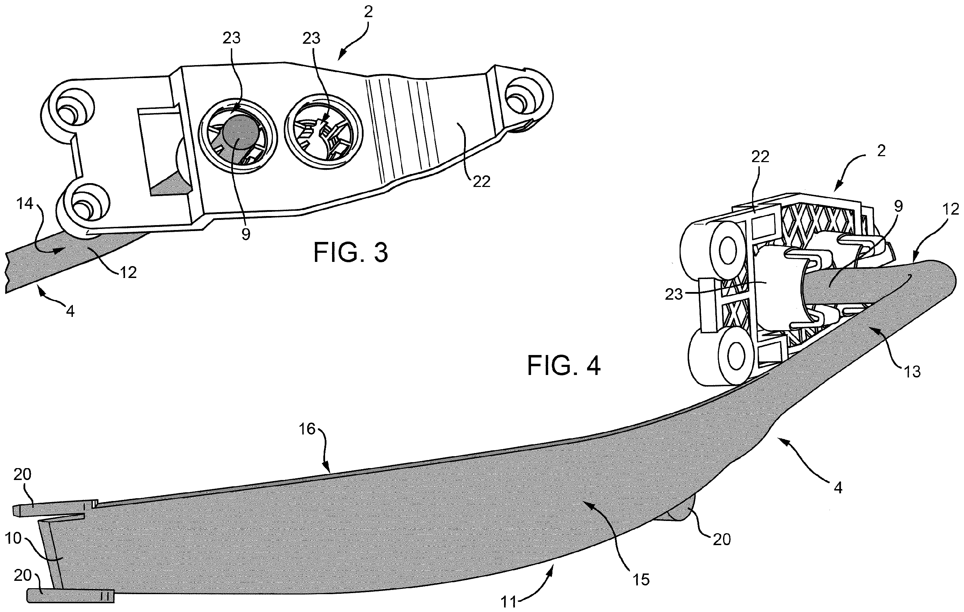

The second stretch 12 has a substantially constant cross-section of a symmetrical shape; in the non limitative embodiment shown the cross-section of stretch 12 is of circular shape (figure 3) and of constant transverse or cross area; the second stretch 12 is delimited (see figures 3 and 4) by a front lateral surface 13 of semi-cylindrical shape and by a rear lateral surface 14 also of semi-cylindrical shape joining smoothly and with continuity to each other in order to define the constant circular cross section of stretch 12.

Here and hereinafter the terms "front" or "frontal" and "rear" are intended to be referred to the driving direction D; accordingly, front lateral surface 13 delimits laterally stretch 12 in the forward direction of movement of the vehicle and rear lateral surface 14 delimits laterally stretch 12 in the opposite direction, namely facing away the forward direction of movement of the vehicle.

The first stretch 11 is likewise delimited (figures from 4 to 8) by a front lateral surface 15 and by a rear lateral surface 16 which join together at a corresponding upper, longitudinal edge 17 and at a lower, longitudinal edge 18 of the stretch 11, e.g. rounded, sharp, flat or blunt.

Surfaces 13,14 and 15,16, as well as edges 17,18 extend in the direction of development in length of element 4, indicate by an arrow E in figures 5 and 8, i.e. in a longitudinal direction of elongated element 4.

Moreover, as it is a well established art in light guides, surfaces 13,14 and 15,16 are designed to have total reflection capacity so that the light rays, e.g. generated by source 3, collected at one end, in the case shown at end 9, are guided towards the other end, in the case shown to end 10; generally speaking it is also possible the vice versa and the light rays may be collected at end 10 and guided towards end 9. It is also possible, according to an arrangement known in the light guide field of technology, to have a "double injection" and therefore collect the light rays at both ends 9 and 10, in this case using two or more light sources 3.

In the prior art, light guides of constant cross-section are used to guide the light rays generated by a remote light source along the full length of the light guide, from one end to the other, to reach the front face 6 to illuminate it and/or the transparent cover 7, so that the light rays are emitted along optical axis A. In this case, in order to illuminate a fair large area, a plurality of light guides and further optical means are necessary.

In the present invention, the light rays collected at end 9 are emitted at stretch 11, either along the whole length or along a partial length of stretch 11, through front lateral surface 15 thereof.

According to an aspect of the invention, in fact, at least the first stretch 11 of the elongated element 4 constituting the light guide is provided on at least the rear lateral surface 16 thereof with light deviating means, indicated as a whole by reference number 19 (figures 8 and 9) .

Means 19 are well known in the art and may be, as they actually are in the non limiting embodiment shown, prims or microprisms provided on the rear lateral surface 16 of stretch 11 of the elongated element 4 constituting the light guide.

Prisms 19 direct/deviate the light rays, travelling along the light guide 4 along direction E by total internal reflection, against the front lateral surface 15 of the light guide 4 with an angle of incidence that allows the light rays to pass through the front lateral surface 15 of the light guide 4 to be emitted from the light guide 4 along the whole or partial length of stretch 11.

According to an aspect of the invention, surface 15 is arranged facing the same direction of the front face 6 of the housing 2, so that the light rays collected by end 9 are emitted by surface 15 along the optical axis A e.g. in the directions R indicated by the arrows in figure 5. At this purpose, the light guide 4 is arranged transversally to the optical axis A and parallel to the front face 6 of the housing 2.

According to the main aspect of the invention, in combination with what described above, the first stretch 11 of the elongated element 4 constituting the light guide has its cross section S which is variable in shape along the direction of travelling of the light rays along the light guide 4, i.e. along direction E.

In particular, the light deviating means 19 are designed to direct the light rays R through a front lateral surface 15 of the first stretch 11 of the light guide 4 having a frontal dimension (i.e. facing direction D) which is variable along the direction of travelling E of the light rays along the light guide 4.

According to a first embodiment of the invention, the cross section S of the first stretch 11 has a substantially constant cross area but is variable in shape (see figure 8) increasing (and/or decreasing, as it may be necessary to obtain a desired light pattern) its height H in a direction perpendicular to the optical axis A and parallel to the front face 6 of the housing 2 and decreasing (and/or increasing, as it may be necessary to obtain a desired light pattern) its width L in a direction parallel to the optical axis A and substantially perpendicular to the front face 6 of the housing 2.

According to a possible second embodiment of the invention, the cross section S of the first stretch 11 is variable in shape increasing (and/or decreasing, as it may be necessary to obtain a desired light pattern) its height H in a direction perpendicular to the optical axis A and parallel to the front face 6 of the housing 2 and decreasing (and/or increasing, as it may be necessary to obtain a desired light pattern) its width L in a direction parallel to the optical axis A and substantially perpendicular to the front face 6 of the housing 2 in such a manner that the cross section S of such first stretch has a cross area progressively decreasing along the direction of travelling E of the light rays within the light guide 4 and towards the second end 10 of the light guide 4. This second solution should ensure a better uniformity of illumination of surface 15 even for quite long light guides 4.

In both the embodiments described above, the elongated element 4 constituting the light guide receive the light rays from the light source 3 at its first end 9, which is arranged far away from the front face 6 of the housing 2 and flattens progressively towards its second end 10 at the first stretch 11 thereof.

As already explained, the rear lateral surface 16 of the first stretch 11 of the light guide 4 may be provided with the light deviating 19 means either along the whole length of stretch 11 or only along part of its length, according to the light pattern which is desired to be produced.

In practice, according to the invention the light guide 4 is composed by a stretch 12 which has only the aim to collect the light rays from source 3 and to transport them where needed and by a stretch 11 which has the aim of providing the required light pattern/distribution and that, for this purpose, is shaped as a flat, ribbon-like part, either straight or curved, so as to follow the style of the vehicle, which height H is made to vary along the direction E according to the desired light distribution.

The width L may also be made to vary along the direction E, increasing or decreasing, in order to either maintain the cross sectional area of element 4 substantially constant or to make it to progressively reduce as moving from end 9 toward end 10, so as to maintain within the light guide 4 a substantially constant light energy distribution along the whole extension in length of stretch 11.

According to a further aspect of the invention, the first stretch 11, which is quite thin and wide in comparison with stretch 12, is integrally provided with locking means to the housing 2 consisting in toothed elastic wings 20 provided integral in one piece with element 4 and projecting there from at the rear side of stretch 11, i.e. on the side of rear surface 16. Wings 20 may engage lugs or slots provided in the body 5 of housing 2.

The light source 3 consists preferably in at least one LED or in a plurality of LEDs (well known and therefore not described in details), possibly of different colors, housed in a package provided with cooling fins 21 (figure 2) and supported, e.g. by snap coupling, by a bracket 22 (figures 3,4) to which also end 9 is rendered integral, e.g. by force fitting it into a through seat 23 of bracket 22.

Bracket 22 is part of the housing 2 and is made integral to end 8 of body 5 e.g. by screws (known and not shown for sake of simplicity) of by any other means (snap-coupling, gluing, welding, etc.

As already explained, front face 6 of housing 2 is provided with a transparent cover 7 which protects the at least one light guide 4.

In the embodiment shown, there are two light guides 4 present (see figures 1 and 2) and bracket 22 has two seats 23 provided side by side so that both light guides 4 can be illuminated by the same package of LEDs 3. Moreover, in order to obtain certain stylistic effects, the lighting device 1 can be provided with a mask 24 impervious to light, to cover at least in part the first stretch 11 of the light guide 4. In this manner with the same light guide 4 having identical stretches 11 different light patterns may be provided, e.g. for different models of the same class of vehicle, merely by providing a mask 24 of suitable shape, which is more economical to provide than many light guides of different shape.

All the aims of the invention are therefore accomplished.

## Claims

1. A Lighting device (1) for vehicles, such as a headlight or a headlamp or rear lamp, comprising a housing (2) designed to be mounted on a vehicle and carrying at least a light source (3) and at least one light guide (4), the housing having a front face (6) in use facing opposite to the vehicle and along a driving direction (D), the light guide being designed to collect light rays from the light source and to deliver the light rays collected from the light source along an optical axis (A) transverse to said front face and extending in the driving direction; the light guide being shaped as an elongated element (4) made of a material pervious to light having a first and second opposite ends (9,10) and a solid cross section (S) delimited by lateral surfaces (13,14;15,16) designed to have total reflection capacity so that the light rays collected at one end (9) are guided towards the other end (10) and vice versa; at least a first stretch (11) of the elongated element (4) constituting the light guide being provided on at least a rear lateral surface (16) thereof with light deviating means (19) to direct the light rays travelling along the light guide against a front lateral surface (15) of the light guide, facing the same direction of the front face (6) of the housing, with an angle of incidence that allows the light rays to pass through the front lateral surface (15) of the light guide to be emitted from the light guide along the optical axis (A), the light guide (4) being arranged transversally to the optical axis and parallel to the front face (6) of the housing; wherein
- at least the first stretch (11) of the elongated element constituting the light guide has its cross section (S) variable in shape along a direction of travelling (E) of the light rays along the light guide; **characterized in that**
i)- the elongated element (4) constituting the light guide receive the light rays from the light source (3) at its first end (9), which is arranged far away from the front face (6) of the housing and flattens progressively towards its second end (10) at said first stretch (11) thereof; and
ii)- the elongated element (4) constituting the light guide comprises said first stretch (11), which is arranged towards the second end (10), and a second stretch (12) arranged towards the first end (9); the second stretch (12) having a substantially constant cross-section (S) of a symmetrical shape; and the first stretch (11) being integrally provided with locking means (20) to the housing (2) .

2. Lighting device according to claim 1, **characterized in that** the light deviating means (19) are designed to direct the light rays through a front lateral surface (15) of the first stretch (11) of the light guide (4) which frontal dimension is variable along the direction of travelling (E) of the light rays along the light guide.

3. Lighting device according to claim 1 or 2, wherein the cross section (S) of the said first stretch (11) has a substantially constant cross area but is variable in shape increasing and/or decreasing its height (H) in a direction perpendicular to the optical axis (A) and parallel to the front face (6) of the housing and decreasing and/or increasing its width (L) in a direction parallel to the optical axis and substantially perpendicular to the front face of the housing.

4. Lighting device according to claim 1 or 2, wherein the cross section (S) of the said first stretch (11) is variable in shape increasing and/or decreasing its height (H) in a direction perpendicular to the optical axis (A) and parallel to the front face (6) of the housing and decreasing and/or increasing its width (L) in a direction parallel to the optical axis and substantially perpendicular to the front face of the housing in such a manner that the cross section (S) of the said first stretch (11) has a cross area progressively decreasing along the direction of travelling (E) of the light rays within the light guide (4) and towards the second end (10) of the light guide.

5. Lighting device according to claim 1, wherein the rear lateral surface of the first stretch (11) of the light guide is provided with said light deviating means (19) only along part of its length.

6. Lighting device according to any of the preceding claims, wherein said light deviating means are prims or micro-prism (19) provided on the rear lateral surface (16) of the first stretch (11) of the elongated element (4) constituting the light guide.

7. Lighting device according to any of the preceding claims, wherein said light source (3) consists in at least one LED or in a plurality of LEDs; said front face (6) of the housing being provided with a transparent cover (7) which protects the at least one light guide (4) and, optionally, with a mask (24) to cover at least in part the first stretch (11) of the light guide (4).

8. Vehicle provided with a lighting device (1) according to one of the preceding claims.

## Patentansprüche

1. Beleuchtungsvorrichtung (1) für Fahrzeuge, wie beispielsweise ein Scheinwerfer oder eine Front- oder Rückleuchte, mit einem Gehäuse (2), das dazu ausgelegt ist, an einem Fahrzeug montiert zu werden, und das wenigstens eine Lichtquelle (3) und wenigstens einen Lichtleiter (4) trägt, wobei das Gehäuse eine Vorderfläche (6) aufweist, die im Gebrauch entgegengesetzt zu dem Fahrzeug und entlang einer Fahrtrichtung (D) weist, wobei der Lichtleiter dazu ausgelegt ist, Lichtstrahlen von der Lichtquelle zu sammeln und die von der Lichtquelle gesammelten Lichtstrahlen entlang einer optischen Achse (A) weiterzuleiten, die quer zu der Vorderfläche verläuft und sich in Fahrtrichtung erstreckt; wobei der Lichtleiter als ein langgestrecktes Element (4) geformt ist, das aus einem lichtdurchlässigen Material gefertigt ist und ein erstes und ein zweites gegenüberliegendes Ende (9, 10) und einen massiven Querschnitt (S) aufweist, der durch Seitenflächen (13, 14, 15, 16) begrenzt ist, die so gestaltet sind, dass sie ein Totalreflexionsvermögen aufweisen, so dass die an einem Ende (9) gesammelten Lichtstrahlen zu dem anderen Ende (10) geleitet werden, und umgekehrt; wobei wenigstens ein erster Abschnitt (11) des langgestreckten Elements (4), das den Lichtleiter bildet, auf wenigstens einer hinteren Seitenfläche (16) desselben mit Lichtumlenkmitteln (19) versehen ist, um die Lichtstrahlen, die entlang des Lichtleiters laufen, gegen eine vordere Seitenfläche (15) des Lichtleiters, die in die gleiche Richtung weist wie die Vorderfläche (6) des Gehäuses, mit einem Einfallswinkel zu lenken, der es den Lichtstrahlen ermöglicht, die vordere Seitenfläche (15) des Lichtleiters zu durchdringen, um von dem Lichtleiter entlang der optischen Achse (A) emittiert zu werden, wobei der Lichtleiter (4) quer zu der optischen Achse und parallel zu der Vorderfläche (6) des Gehäuses angeordnet ist; wobei
- wenigstens der erste Abschnitt (11) des langgestreckten Elements, das den Lichtleiter bildet, einen Querschnitt (S) aufweist, der entlang einer Laufrichtung (E) der Lichtstrahlen entlang des Lichtleiters in seiner Form variabel ist; **dadurch gekennzeichnet, dass**
i)- das langgestreckte Element (4), das den Lichtleiter bildet, die Lichtstrahlen von der Lichtquelle (3) an seinem ersten Ende (9) aufnimmt, das weit entfernt von der Vorderfläche (6) des Gehäuses angeordnet ist, und sich an dem ersten Abschnitt (11) in Richtung zu seinem zweiten Ende (10) fortschreitend abflacht; und
ii)- das langgestreckte Element (4), das den Lichtleiter bildet, den ersten Abschnitt (11), der in Richtung zu dem zweiten Ende (10) angeordnet ist, und einen zweiten Abschnitt (12), der in Richtung zu dem ersten Ende (9) angeordnet ist, umfasst; wobei der zweite Abschnitt (12) einen im Wesentlichen konstanten Querschnitt (S) mit einer symmetrischen Form aufweist; und wobei der erste Abschnitt (11) integral mit einer Verriegelungseinrichtung (20) an dem Gehäuse (2) vorgesehen ist.

2. Beleuchtungsvorrichtung nach Anspruch 1, **dadurch gekennzeichnet, dass** die Lichtumlenkmittel (19) so gestaltet sind, dass sie die Lichtstrahlen durch eine vordere Seitenfläche (15) des ersten Abschnitts (11) des Lichtleiters (4) lenken, dessen Frontalabmessung entlang der Laufrichtung (E) der Lichtstrahlen entlang des Lichtleiters variabel ist.

3. Beleuchtungsvorrichtung nach Anspruch 1 oder 2, wobei der Querschnitt (S) des ersten Abschnitts (11) eine im Wesentlichen konstante Querschnittsfläche aufweist, aber in seiner Form variabel ist, die in einer Richtung senkrecht zu der optischen Achse (A) und parallel zu der Vorderfläche (6) des Gehäuses in ihrer Höhe (H) zunimmt und/oder abnimmt und in einer Richtung parallel zu der optischen Achse und im Wesentlichen senkrecht zu der Vorderfläche des Gehäuses in ihrer Breite (L) abnimmt und/oder zunimmt.

4. Beleuchtungsvorrichtung nach Anspruch 1 oder 2, wobei der Querschnitt (5) des ersten Abschnitts (11) in seiner Form variabel ist, die in ihrer Höhe (H) in einer Richtung senkrecht zu der optischen Achse (A) und parallel zu der Vorderfläche (6) des Gehäuses zunimmt und/oder abnimmt und in ihrer Breite (L) in einer Richtung parallel zu der optischen Achse und im Wesentlichen senkrecht zu der Vorderfläche des Gehäuses in der Weise abnimmt und/oder zunimmt, dass der Querschnitt (S) des ersten Abschnitts (11) eine Querschnittsfläche aufweist, die entlang der Laufrichtung (E) der Lichtstrahlen innerhalb des Lichtleiters (4) und in Richtung zu dem zweiten Ende (10) des Lichtleiters fortschreitend abnimmt.

5. Beleuchtungsvorrichtung nach Anspruch 1, wobei die hintere Seitenfläche des ersten Abschnitts (11) des Lichtleiters nur über einen Teil ihrer Länge mit den Lichtumlenkmitteln (19) versehen ist.

6. Beleuchtungsvorrichtung nach einem der vorangehenden Ansprüche, wobei die Lichtumlenkmittel Prismen oder Mikroprismen (19) sind, die an der hinteren Seitenfläche (16) des ersten Abschnitts (11) des langgestreckten Elements (4), das den Lichtleiter bildet, vorgesehen sind.

7. Beleuchtungsvorrichtung nach einem der vorhergehenden Ansprüche, wobei die Lichtquelle (3) aus wenigstens einer LED oder aus mehreren LED besteht; wobei die Vorderfläche (6) des Gehäuses mit einer transparenten Abdeckung (7) versehen ist, die den wenigstens einen Lichtleiter (4) schützt, und optional mit einer Maske (24), um den ersten Abschnitt (11) des Lichtleiters (4) wenigstens teilweise abzudecken.

8. Fahrzeug mit einer Beleuchtungsvorrichtung (1) nach einem der vorangehenden Ansprüche.

## Revendications

1. Dispositif d'éclairage (1) pour véhicules, tel qu'un projecteur ou un phare ou feu arrière, comprenant un boîtier (2) conçu pour être monté sur un véhicule et portant au moins une source de lumière (3) et au moins un guide de lumière (4), le boîtier présentant une face avant (6) tournée lors de l'utilisation vers l'opposé du véhicule et le long d'une direction de conduite (D), le guide de lumière étant conçu pour capter les rayons de lumière provenant de la source de lumière et pour distribuer les rayons de lumière captés de la source de lumière le long d'un axe optique (A) transversal par rapport à ladite face avant et s'étendant dans la direction de conduite ; le guide de lumière étant formé comme un élément allongé (4) composé d'un matériau perméable à la lumière présentant une première et deuxième extrémité opposée (9, 10) et une section transversale pleine (S) délimitée par des surfaces latérales (13, 14 ; 15, 16) conçues pour présenter une capacité de réflexion totale de sorte que les rayons de lumière captés à une extrémité (9) sont guidés vers l'autre extrémité (10) et vice versa ; au moins un premier étirement (11) de l'élément allongé (4) constituant le guide de lumière étant prévu sur au moins une surface latérale arrière (16) de celui-ci avec des moyens de déviation de lumière (19) pour diriger les rayons de lumière se déplaçant le long du guide de lumière contre une surface latérale avant (15) du guide de lumière, tourné dans la même direction de la face avant (6) du boîtier, avec un angle d'incidence qui permet aux rayons de lumière de passer à travers la surface latérale avant (15) du guide de lumière, destinés à être émis à partir du guide de lumière le long de l'axe optique (A), le guide de lumière (4) étant agencé transversalement par rapport à l'axe optique et parallèlement à la face avant (6) du boîtier ; dans lequel
- au moins le premier étirement (11) de l'élément allongé constituant le guide de lumière présente sa section transversale (S) variable en forme le long d'une direction de déplacement (E) des rayons de lumière le long du guide de lumière ; **caractérisé en ce que**
i) - l'élément allongé (4) constituant le guide de lumière reçoit les rayons de lumière de la source de lumière (3) à sa première extrémité (9), qui est agencée loin de la face avant (6) du boîtier et s'aplanit progressivement vers sa deuxième extrémité (10) au niveau dudit premier étirement (11) de celui-ci ; et
ii) - l'élément allongé (4) constituant le guide de lumière comprend ledit premier étirement (11), qui est agencé vers la deuxième extrémité (10), et un deuxième étirement (12) agencé vers la première extrémité (9) ; le deuxième étirement (12) présentant une section transversale (S) sensiblement constante d'une forme symétrique ; et le premier étirement (11) étant pourvu intégralement de moyens de verrouillage (20) par rapport au boîtier (2).

2. Dispositif d'éclairage selon la revendication 1, **caractérisé en ce que** les moyens de déviation de lumière (19) sont conçus pour diriger les rayons de lumière à travers une surface latérale avant (15) du premier étirement (11) du guide de lumière (4) dont la dimension frontale est variable le long de la direction de déplacement (E) des rayons de lumière le long du guide de lumière.

3. Dispositif d'éclairage selon la revendication 1 ou 2, dans lequel la section transversale (S) dudit premier étirement (11) présente une surface transversale sensiblement constante mais est variable en forme augmentant et/ou diminuant sa hauteur (H) dans une direction perpendiculaire à l'axe optique (A) et parallèle à la face avant (6) du boîtier et diminuant et/ou augmentant sa largeur (L) dans une direction parallèle à l'axe optique et sensiblement perpendiculaire à la face avant du boîtier.

4. Dispositif d'éclairage selon la revendication 1 ou 2, dans lequel la section transversale (S) dudit premier étirement (11) est variable en forme augmentant et/ou diminuant sa hauteur (H) dans une direction perpendiculaire à l'axe optique (A) et parallèle à la face avant (6) du boîtier et diminuant et/ou augmentant sa largeur (L) dans une direction parallèle à l'axe optique et sensiblement perpendiculaire à la face avant du boîtier de telle manière que la section transversale (S) dudit premier étirement (11) présente une surface transversale diminuant progressivement le long de la direction de déplacement (E) des rayons de lumière dans le guide de lumière (4) et vers la deuxième extrémité (10) du guide de lumière.

5. Dispositif d'éclairage selon la revendication 1, dans lequel la surface latérale arrière du premier étirement (11) du guide de lumière est pourvue desdits moyens de déviation de lumière (19) uniquement le long d'une partie de sa longueur.

6. Dispositif d'éclairage selon l'une quelconque des revendications précédentes, dans lequel lesdits moyens de déviation de lumière sont des prismes ou micro-prismes (19) prévus sur la surface latérale arrière (16) du premier étirement (11) de l'élément allongé (4) constituant le guide de lumière.

7. Dispositif d'éclairage selon l'une quelconque des revendications précédentes, dans lequel ladite source de lumière (3) consiste en au moins une DEL ou en une pluralité de DEL ; ladite face avant (6) du boîtier étant pourvue d'un couvercle transparent (7) qui protège l'au moins un guide de lumière (4) et, éventuellement, d'un masque (24) pour couvrir au moins en partie le premier étirement (11) du guide de lumière (4).

8. Véhicule pourvu d'un dispositif d'éclairage (1) selon l'une des revendications précédentes.
